# EUROPÄISCHE PATENTSCHRIFT

(11) **EP 4 039 992 B1**
(45) Veröffentlichungstag und Bekanntmachung des Hinweises auf die Patenterteilung: **15.05.2024**
(21) Anmeldenummer: 22154415.8
(22) Anmeldetag: 01.02.2022
(51) Int. Cl.: F16B 33/00, F16B 37/12, F16B 37/08

(54) **VERBINDUNGSTEIL UND VERFAHREN ZUR HERSTELLUNG EINES VERBINDUNGTEILS**
CONNECTION PIECE AND METHOD FOR PRODUCING A CONNECTION PIECE
PIÈCE DE LIAISON ET PROCÉDÉ DE FABRICATION D'UNE PIÈCE DE LIAISON

(30) Priorität: 03.02.2021 DE 102021102492
(43) Veröffentlichungstag der Anmeldung: 10.08.2022
(73) Patentinhaber: CENA Kunststoff GmbH, 35088 Battenberg (DE)
(72) Erfinder: LIESE, Ralf, 59909 Bestwig (DE)
(74) Vertreter: Dantz, Jan Henning

(56) Entgegenhaltungen:
- EP-A1- 1 134 435
- WO-A1-2017/151032
- DE-U1- 9 114 083
- US-A- 5 667 870
- US-B2- 10 493 890

## Beschreibung

Die vorliegende Erfindung betrifft ein Verbindungsteil mit einem Gusskörper, an dem ein hülsenförmiger Abschnitt ausgebildet ist, wobei an einer Innenseite des hülsenförmigen Abschnittes eine Vielzahl von nach innen ragenden, durch Gießen oder 3D-Druck herstellte Vorsprünge entlang mindestens eines Gewindeganges integral ausgebildet sind und in axiale Richtung des hülsenförmigen Abschnittes jeweils nur ein Vorsprung an der Innenseite vorgesehen ist, wobei die Vorsprünge über den Umfang verteilt in axiale Richtung in mehreren Ebenen angeordnet sind.

Zur Herstellung von Verbindungsteilen mit einem Innengewinde, beispielsweise einer Überwurfmutter gemäß der DE 10 2019 114 587 A1, ist es bekannt, ein Innengewinde durch Drehen oder Fräsen einzuschneiden. Ferner kann ein solches Innengewinde auch im Gießverfahren hergestellt werden, beispielsweise durch Kunststoffspritzguss oder Druckguss, wobei dann ein Kern, der das Innengewinde formt, aus dem urgeformten Gewinde ausgedreht werden muss. Solche Ausschraubkerne machen die Herstellung aufwändig.

WO 2017/151 032 A1 offenbart eine mehrteilige Mutter, die an einem Gewinde aufschraubbar ist. An den einzelnen Teilen der Mutter sind Gewindeabschnitte ausgebildet.

DE 91 14 083 offenbart eine Befestigungshülse mit Rastzähnen an biegbaren Federstegen.

In der US 10 493 890 ist ein in einem Gußverfahren hergestelltes Befestigungsmittel mit einer Hülse offenbart, an der über den Umfang verteilt mehrere nach innen ragende Brückenstege mit einer Profilierung ausgebildet sind.

US 5 667 870 offenbart eine Gewindeverbindung, bei der eine Hülse mit mehreren Gewindesegmenten versehen ist, die auf ein Außengewinde aufschraubbar sind.

Es ist daher Aufgabe der vorliegenden Erfindung, ein Verbindungsteil zu schaffen, die eine effektive Herstellung eines für eine Gewindeverbindung geeigneten Verbindungsteils ermöglichen.

Diese Aufgabe wird mit einem Verbindungsteil mit den Merkmalen des Anspruches 1 gelöst.

Bei dem erfindungsgemäßen Verbindungsteil sind an einer Innenseite des hülsenförmigen Abschnittes eine Vielzahl von nach innen ragenden, durch Gießen oder 3D-Druck herstellte Vorsprünge entlang mindestens eines Gewindeganges integral ausgebildet. Dadurch kann das Verbindungsteil mit einem Außengewinde verbunden werden, wobei sich die einzelnen Vorsprünge an der Innenseite effektiv herstellen lassen. Es werden nicht mehr durchgängige Gewindegänge an der Innenseite angeformt, sondern voneinander beabstandete Vorsprünge, die zwar zur Verbindung mit einem Außengewinde geeignet sind, aber nur ein Gewindesegment ausbilden, um mit dem Außengewinde verbunden zu werden. Solche beabstandeten Vorsprünge lassen sich ohne ein Ausdrehen von Kernen oder eine aufwändige Nachbearbeitung in einem Gießverfahren oder im 3D-Druck herstellen.

In axialer Richtung des hülsenförmigen Abschnittes ist jeweils nur ein Vorsprung an der Innenseite vorgesehen. Somit kann jeder Vorsprung beim Gießvorgang durch zwei axial bewegliche Kerne umgeben werden, die die Kontur des Vorsprunges vorgeben. Über den Umfang verteilt können zwei oder mehr Kerne vorgesehen sein, die nach Herstellung des hülsenförmigen Abschnittes in axiale Richtung aus dem Innenraum herausbewegt werden.

Die Vorsprünge sind erfindungsgemäß über den Umfang verteilt in mehreren Ebenen angeordnet. Ein durchgängiger Gewindegang über eine Umfangsdrehung bildet dabei eine erste Ebene aus, und ein sich an diese Ebene anschließender zweiter Gewindegang, der sich wieder um eine Umfangsdrehung erstreckt, bildet eine weitere Ebene aus. Die Vorsprünge sind jeweils nur über ein Segment eines Gewindeganges ausgebildet und können beispielsweise in zwei, drei oder vier solchen Ebenen angeordnet sein. Dabei sind bevorzugt zwei in Umfangsrichtung benachbarte Vorsprünge in unterschiedlichen Ebenen angeordnet. Pro Ebene eines Gewindeganges können beispielswiese drei, vier oder fünf Vorsprünge an der Innenseite des hülsenförmigen Abschnittes hervorstehen.

Für eine hohe Kraftübertragung an dem hülsenförmigen Abschnitt sind die Vorsprünge vorzugsweise leistenförmig ausgebildet. Dabei können die Vorsprünge in Längsrichtung zu einer Richtung senkrecht zu einer axialen Richtung geneigt ausgebildet sein, beispielsweise in einem Winkel zwischen 2° bis 10°. Die Längsrichtung der Vorsprünge fluchtet somit mit der Ausrichtung eines Gewindeganges.

Die Vorsprünge erstrecken sich bevorzugt über einen Umfangswinkel zwischen 5° und 50°, insbesondere 10° bis 30°. Die Erstreckung der Vorsprünge in Umfangsrichtung richtet sich nach der Anzahl der Vorsprünge, die insgesamt an dem hülsenförmigen Abschnitt vorgesehen sind, da in axiale Richtung jeweils nur ein einziger Vorsprung vorgesehen ist. An dem hülsenförmigen Abschnitt können über den Umfang verteilt beispielsweise 5 bis 25, insbesondere 8 bis 15, Vorsprünge angeordnet sein.

Zur effektiven Herstellung kann zwischen zwei in Umfangsrichtung benachbarten Vorsprüngen, die in unterschiedlichen Ebenen in axialer Richtung angeordnet sind, in Umfangsrichtung ein Spalt vorgesehen sein. Auch wenn die Vorsprünge in unterschiedlichen Ebenen bezüglich ihres Gewindeganges angeordnet sind, ist ein Spalt in Umfangsrichtung zwischen den in Umfangsrichtung benachbarten Vorsprüngen vorteilhaft, weil er das Entfernen der Kerne in axiale Richtung erleichtert.

Die Vorsprünge sind im Querschnitt vorzugsweise dreieckförmig oder trapezförmig ausgebildet, um auch höhere Spannkräfte auf das Verbindungsteil übertragen zu können.

Das Verbindungsteil ist erfindungsgemäß als Spreizdübel oder Rohrverschraubung ausgebildet und an dem hülsenförmigen Abschnitt sind mehrere biegbare Stege in axiale Richtung angeformt sind.

Zur Ausbildung eines Dübels können beispielsweise an dem hülsenförmigen Abschnitt mehrere biegbare Stege in axialer Richtung angeformt sein, die dann über einen in den hülsenförmigen Abschnitt eindrehbaren Gewindeabschnitt verformbar sind.

In einer bevorzugten Ausgestaltung ist das Verbindungsteil mit einem ringförmigen Abschnitt mit einem radial hervorstehenden Flansch versehen, an dem über biegbare Stege der hülsenförmige Abschnitt angeformt ist. Dann kann das Verbindungsteil Teil eines Dübels sein, wenn die biegbaren Stege radial nach außen verspannt werden durch eine Bewegung des hülsenförmigen Abschnittes in axiale Richtung relativ zu dem ringförmigen Abschnitt. Dadurch können die biegbaren Stege den ringförmigen Abschnitt beispielsweise an einer Wand, insbesondere einem Blech oder einer anderen Wand, verspannen. Auch andere Einsatzzwecke des erfindungsgemäßen Verbindungsteils sind natürlich möglich.

Das erfindungsgemäße Verbindungsteil wird vorzugsweise im Spritzgussverfahren aus Kunststoff oder im Aluminiumdruckgussverfahren hergestellt. Bei einer Herstellung aus Kunststoff lassen sich bevorzugt die biegbaren Stege mit einem oder mehreren Filmscharnieren versehen, um dann das Verbindungsteil durch einen Gewindeabschnitt verspannen zu können.

Die Erfindung wird nachfolgend anhand mehrerer Ausführungsbeispiele mit Bezug auf die beigefügten Zeichnungen näher erläutert. Es zeigen:
- Figur 1: eine perspektivische Ansicht eines nicht erfindungsgemäßen Verbindungsteils;
- Figur 2: eine perspektivische Ansicht eines Innengewindes zur Erläuterung der Position der Vorsprünge an dem Verbindungsteil;
- Figuren 3A bis 3E: mehrere Ansichten einer Rohrverschraubung mit einem erfindungsgemäßen Verbindungsteil;
- Figuren 4A bis 4C: mehrere Ansichten der Rohrverschraubung der Figur 3 mit einer Schraube;
- Figuren 5A bis 5D: mehrere Ansichten eines Dübels mit einem erfindungsgemäßen Verbindungsteil;
- Figuren 6A und 6B: zwei Ansichten des Dübels der Figur 5 mit einer Schraube vor der Montage,
- Figur 7: eine Ansicht des Dübels der Figur 6 in der montierten Position, und
- Figur 8: eine Ansicht des Dübels der Figur 5 in einer weiteren Montageposition.

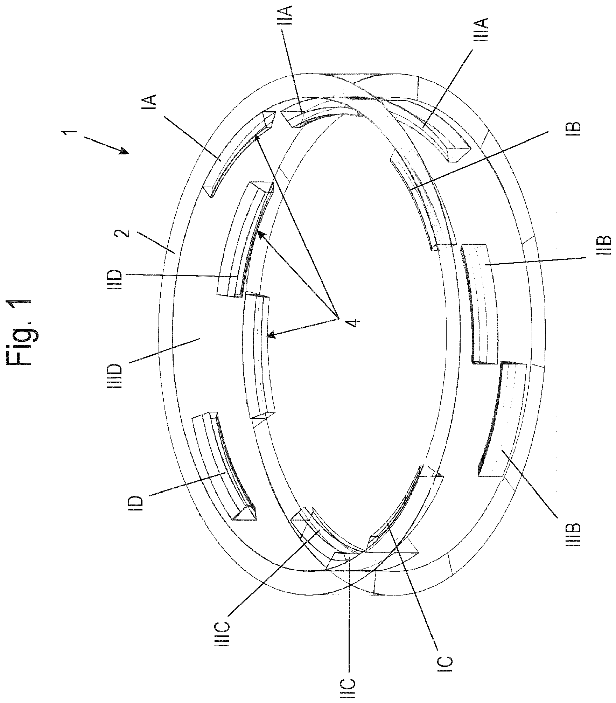

Ein Verbindungsteil 1 umfasst einen in Figur 1 einzeln dargestellten hülsenförmigen Abschnitt 2, der an einer zylindrischen Innenwand 3 eine Vielzahl von Vorsprüngen 4 aufweist, die radial nach innen hervorstehen und leistenförmig ausgebildet sind. Diese Vorsprünge 4 dienen zur Verbindung mit einem Außengewinde und sind integral durch Gießen oder 3D-Druck herstellt, beispielsweise im Kunststoffspritzgussverfahren oder im Aluminiumdruckgussverfahren. Für den 3D-Druck können flüssige Materialien verwendet werden, die dann nach dem Druckvorgang aushärten. Dabei sind die Vorsprünge 4 während des Gießvorganges von Kernen umgeben, die nach dem Formen der Vorsprünge 4 in axiale Richtung aus dem hülsenförmigen Abschnitt 2 entfernt werden.

Die Position der Vorsprünge 4 ist in Figur 1 so gewählt, dass diese in drei Ebenen I, II und III angeordnet sind, wobei pro Ebene I, II und III jeweils mehrere Vorsprünge 4 angeordnet sind. In Figur 1 ist der erste Vorsprung 4 in dem ersten Gewindegang mit Ia bezeichnet ist, der zweite Vorsprung 4 in der ersten Ebene mit Ib, der dritte Vorsprung 4 mit Ic und der vierte Vorsprung mit Id. Entsprechend werden in der zweiten Ebene II die Vorsprünge mit IIa, IIb, IIc und IId bezeichnet, während in der dritten Ebene III die Vorsprünge mit IIIa, IIIb, IIIc und IIId bezeichnet sind.

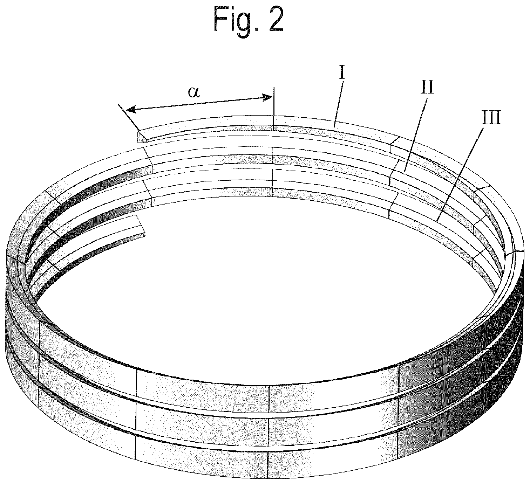

Die Positionierung der Vorsprünge 4 in Figur 1 soll in Verbindung mit Figur 2 näher erläutert werden. In Figur 2 ist ein vollständiger Gewindegang dargestellt, der sich über drei Ebenen erstreckt, wobei eine Ebene jeweils als der Abschnitt bezeichnet wird, über den sich der Gewindegang während einer Umfangsdrehung erstreckt. An den ersten Gewindegang mit der ersten Ebene I schließt sich somit der zweite Gewindegang entlang der zweiten Ebene II und an den zweiten Gewindegang der dritte Gewindegang in der dritten Ebene III an. Diese in drei Ebenen I, II und III angeordneten Gewindegänge werden bei dem erfindungsgemäßen Verbindungsteil 1 nicht durchgängig hergestellt, sondern nur mit einzelnen Segmenten in Form der Vorsprünge 4. Jeder Vorsprung 4 ist nur ein kurzes Segment oder ein Abschnitt des jeweiligen Gewindeganges.

In der ersten Ebene I wurden nur die vier Vorsprünge la, Ib, Ic und Id an dem hülsenförmigen Abschnitt 2 ausgebildet, weitere vier Vorsprünge 4 in der zweiten Ebene II und vier Vorsprünge in der dritten Ebene III. Die Vorsprünge 4 bilden somit nur einen kleinen Abschnitt eines Gewindeganges aus, also ein Gewindesegment. Dieses Gewindesegment erstreckt sich über einen Umfangswinkel α zwischen 5° bis 50°, insbesondere 10° bis 30°. Die Vorsprünge 4 sind dabei leistenförmig ausgebildet und erstrecken sich in Längsrichtung geneigt zu einer Richtung senkrecht zur axialen Richtung, entsprechend der Neigung des Gewindeganges, beispielsweise zwischen 2° bis 10°.

In Figur 1 sind in Umfangsrichtung benachbarte Vorsprünge 4 jeweils in unterschiedlichen Ebenen I, II und III angeordnet. Beispielsweise ist ein Vorsprung in der zweiten Ebene II in Umfangsrichtung benachbart zu zwei Vorsprüngen 4 angeordnet, die in der ersten Ebene I oder der dritten Ebene III angeordnet sind. Eine solche Form lässt sich im Gießverfahren mit Kernen herstellen, die beim Entformen im Wesentlichen in axiale Richtung bewegt werden. Dabei kann zwischen zwei in Umfangsrichtung benachbarten Vorsprüngen 4 ein Spalt vorgesehen sein, so dass die im Umfangsrichtung benachbarten Vorsprünge 4 auch in Umfangsrichtung mit einem Versatz angeordnet sind, um das Entfernen der Kerne zu erleichtern.

Ein so hergestelltes Verbindungsteil 1 kann in der einfachsten Ausgestaltung als Mutter ausgebildet sein, die auf einen Gewindeabschnitt aufschraubbar ist.

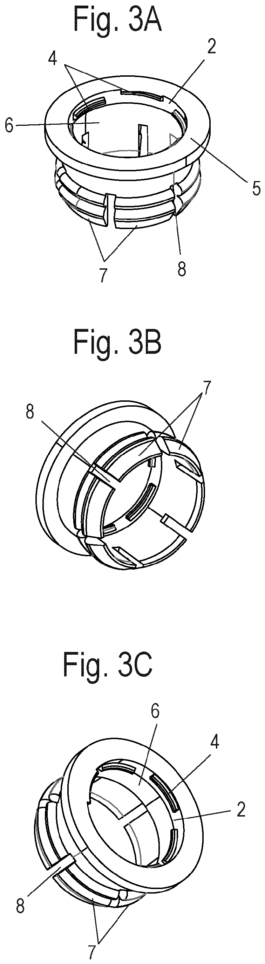

In den Figuren 3A bis 3E ist das Verbindungsteil 1 als Teil einer Rohrverschraubung dargestellt. Das Verbindungsteil 1 ist dabei so ausgebildet, wie dies in Figur 1 dargestellt ist. An dem Verbindungsteil 1 ist ein radial hervorstehender Flansch 5 angeformt. Ferner ist in axiale Richtung an dem Verbindungsteil 1 eine Hülse 6 angeformt, an der axial hervorstehende Stege 7 vorgesehen sind, wobei zwischen benachbarten Stegen 7 jeweils ein Schlitz 8 angeordnet ist. Die Stege 7 sind dabei in radiale Richtung biegbar ausgebildet und besitzen eine Profilierung, um in einer Aufnahme verklemmt werden zu können.

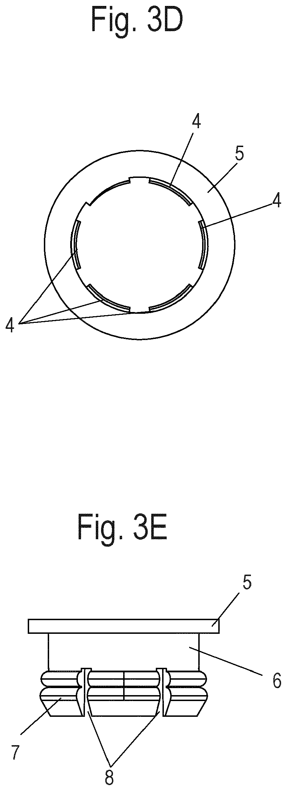

Wie in der Draufsicht auf den Flansch 5 gemäß Figur 3D ersichtlich ist, befindet sich in axiale Richtung gesehen an der innerem Umfangsfläche der Innenwand 3 jeweils nur ein einziger Vorsprung 4, wobei in Umfangsrichtung benachbarte Vorsprünge 4 mit Versatz angeordnet sind, so dass ein Spalt zwischen diesen Vorsprüngen 4 sichtbar ist.

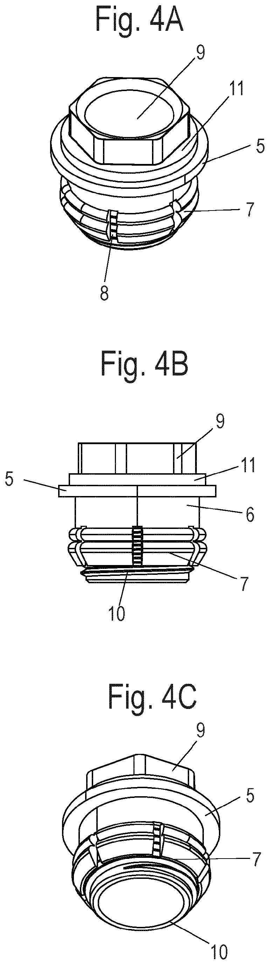

In den Figuren 4A bis 4C ist das in Figur 3 dargestellte Verbindungsteil zusammen mit einer Schraube gezeigt, die mit einem Gewindeabschnitt 10 in den hülsenförmigen Abschnitt 2 eingreift. Die Schraube umfasst dabei einen Schraubenkopf 9 zur Verbindung mit einem Werkzeug und einen radial hervorstehenden Flansch 11, der an dem Flansch 5 an dem Verbindungsteil 1 anliegt. Durch Eindrehen des Gewindeabschnittes 10 in das Verbindungsteil 1 ist eine klemmende Verbindung zwischen der Schraube und dem Verbindungsteil 1 herstellbar, wobei der Gewindeabschnitt 10 die biegbaren Stege 7 radial nach außen drücken kann, so dass diese in einer Aufnahme klemmend festlegbar sind.

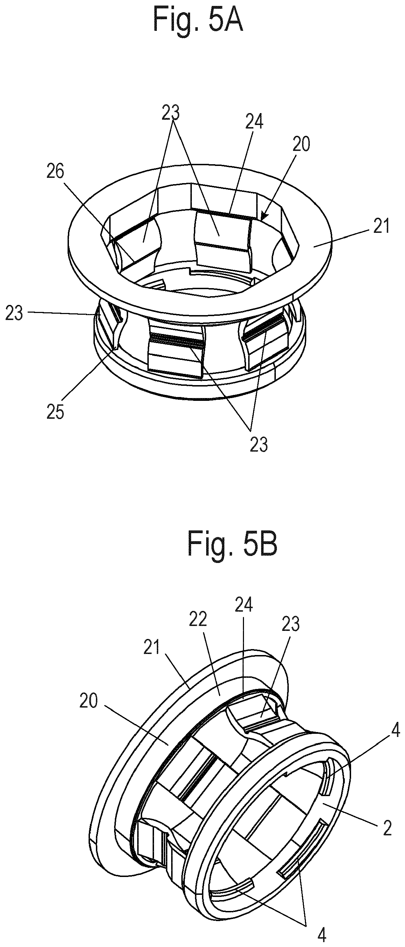

In den Figuren 5A bis 5D ist eine weitere Anwendung des erfindungsgemäßen Verbindungsteils 1 mit dem hülsenförmigen Abschnitt 2 dargestellt, der Bestandteil eines Dübels ist. Der Dübel umfasst einen ringförmigen Abschnitt 20, der über eine Vielzahl über den Umfang verteilter biegbarer Stege 23 mit dem hülsenförmigen Abschnitt 2 des Verbindungsteils 1 verbunden ist. An dem hülsenförmigen Abschnitt 2 sind gemäß Figur 1 eine Vielzahl von nach innen ragenden Vorsprüngen 4 an der Innenseite ausgeformt, wie dies oben erläutert wurde.

Der ringförmige Abschnitt 20 umfasst einen radial hervorstehenden Flansch 21 und einen sich axial erstreckenden hülsenförmigen Abschnitt, so dass der ringförmige Abschnitt 20 im Querschnitt winkelförmig ausgebildet ist. An dem axialen hülsenförmigen Abschnitt 22 sind die biegbaren Stege 23 angeformt, die jeweils über ein Filmscharnier 24 mit dem axialen hülsenförmigen Abschnitt 22 verbunden sind und über ein weiteres Filmscharnier 25 mit dem hülsenförmigen Abschnitt 2 des Verbindungsteils verbunden sind. Ferner weisen die biegbaren Stege in einem mittleren Abschnitt ein weiteres Filmscharnier 26 auf. Dadurch können die biegbaren Stege 23 beim Verspannen des Dübels leicht verformt werden, wobei die Filmscharniere 24, 25, 26 durch Materialschwächungen ausgebildet sind.

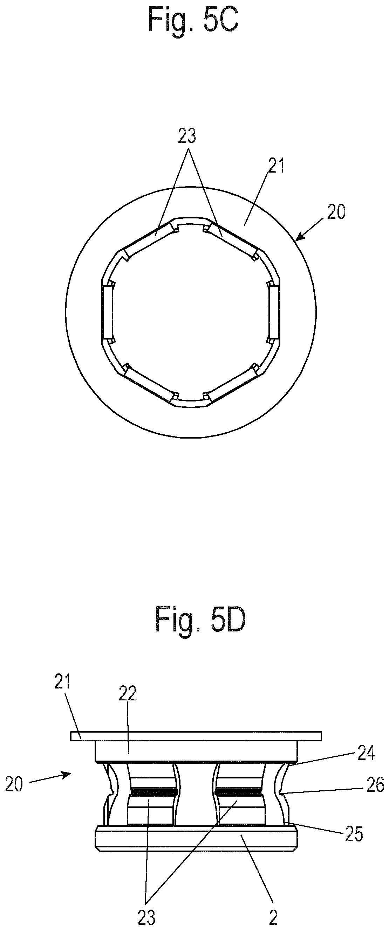

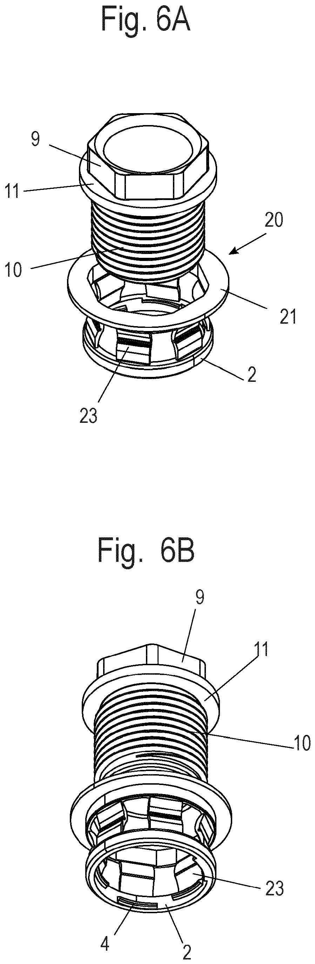

In den Figuren 6A und 6B ist der in Figur 5 dargestellte Dübel vor der Montage gezeigt. Eine Schraube mit einem Gewindeabschnitt 10 und einem Schraubenkopf 9, an dem ein radial hervorstehender Flansch 11 angeformt ist, ist in den Dübel einsteckbar und dann eindrehbar, wobei das Außengewinde an dem Gewindeabschnitt 10 in Eingriff mit den Vorsprüngen 4 an dem hülsenförmigen Abschnitt 2 gelangt.

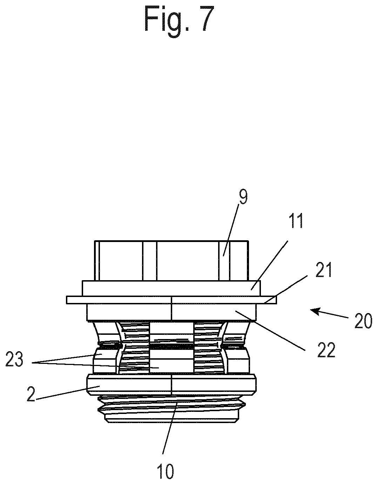

In Figur 7 ist die Montageposition gezeigt, in der der Gewindeabschnitt 10 in Eingriff mit den Vorsprüngen an dem hülsenförmigen Abschnitt 2 steht und der Schraubenkopf 9 mit dem Flansch 11 an dem ringförmigen Abschnitt 20 anliegt. Wird die Schraube nun weitergedreht, wird der hülsenförmige Abschnitt 2 in Richtung des Schraubenkopfes 9 axial bewegt, wodurch die brückenförmigen biegbaren Stege 23 radial nach außen verspannt werden.

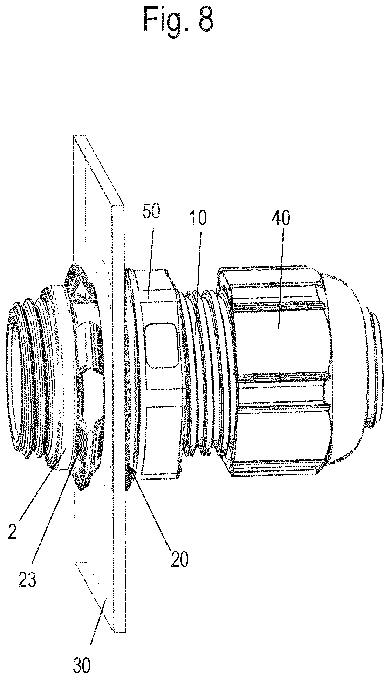

In Figur 8 ist eine Montageposition einer solchen Verbindung gemäß Figur 7 gezeigt. An einer Wand 30, beispielsweise aus einem Blech oder einem Kunststoffteil, ist der Dübel an einer Öffnung montiert, wobei der ringförmige Abschnitt 20 auf einer ersten Seite der Wand 30 angeordnet ist und die biegbaren Stege 23 mit dem hülsenförmigen Abschnitt 2 auf der gegenüberliegenden Seite. Wird nun ein Gewindeabschnitt 10 gedreht, so dass der hülsenförmige Abschnitt 2 durch die Vorsprünge 4 in axiale Richtung bewegt wird, klemmen die biegbaren Stege 23 an der Wand 30 an, wobei die Verformung der biegbaren Stege 23 durch die Filmscharniere 24, 25 und 26 erleichtert wird. Das Drehen des Gewindeabschnittes 10 kann durch eine Überwurfmutter 40 oder einen Schraubenkopf erfolgen. Die so hergestellte Verbindung kann über eine Kontermutter 50 gesichert werden. Optional kann an dem ringförmigen Abschnitt 20 auch ein Dichtmittel vorgesehen sein, beispielsweise ein O-Ring oder ein integral ausgebildeter Dichtring, um eine abgedichtete Verbindung mit der Wand 30 herzustellen.

Das erfindungsgemäße Verbindungsteil 1 mit dem hülsenförmigen Abschnitt 2 ist als Spreizdübel oder Rohrverschraubung ausgebildet. Die Größe der Vorsprünge für das Gewinde und die Gewindeart kann dabei je nach Einsatzzweck variiert werden. Es können metrische Gewinde, Normgewinde, Withworth Gewinde oder Sondergewinden segmentiert an dem hülsenförmigen Abschnitt hergestellt werden.

### Bezugszeichenliste

- 1: Verbindungsteil
- 2: hülsenförmiger Abschnitt
- 3: Innenwand
- 4: Vorsprung
- 5: Flansch
- 6: Hülse
- 7: Steg
- 8: Schlitz
- 9: Schraubenkopf
- 10: Gewindeabschnitt
- 11: Flansch
- 20: ringförmiger Abschnitt
- 21: Flansch
- 22: hülsenförmiger Abschnitt
- 23: biegbarer Steg
- 24: Filmscharnier
- 25: Filmscharnier
- 26: Filmscharnier
- 30: Wand
- 40: Überwurfmutter
- 50: Kontermutter

- I, II, III: Ebene
- Ia, Ib, Ic, Id: Vorsprung
- IIa, IIb, IIc, IId: Vorsprung
- IIIa, IIIb, IIIc, IIId: Vorsprung
- α: Umfangswinkel

## Patentansprüche

1. Verbindungsteil (1) mit einem Gusskörper, an dem ein hülsenförmiger Abschnitt (2) ausgebildet ist, wobei an einer Innenseite des hülsenförmigen Abschnittes (2) eine Vielzahl von nach innen ragenden, durch Gießen oder 3D-Druck herstellte Vorsprünge (4) entlang mindestens eines Gewindeganges integral ausgebildet sind und in axiale Richtung des hülsenförmigen Abschnittes (2) jeweils nur ein Vorsprung an der Innenseite vorgesehen ist, wobei die Vorsprünge (4) über den Umfang verteilt in axiale Richtung in mehreren Ebenen angeordnet sind, **dadurch gekennzeichnet, dass** das Verbindungsteil (1) als Spreizdübel oder Rohrverschraubung ausgebildet ist und an dem hülsenförmigen Abschnitt (2) mehrere biegbare Stege (7, 23) in axiale Richtung angeformt sind.

2. Verbindungsteil nach Anspruch 1, **dadurch gekennzeichnet, dass** die Vorsprünge (4) leistenförmig ausgebildet sind.

3. Verbindungteil nach Anspruch 2, **dadurch gekennzeichnet, dass** die Vorsprünge (4) in Längsrichtung zu einer Richtung senkrecht zur axialen Richtung geneigt ausgerichtet sind, insbesondere in einem Winkel von 2° bis 10°.

4. Verbindungsteil nach einem der vorhergehenden Ansprüche, **dadurch gekennzeichnet, dass** die Vorsprünge (4) sich über einen Umfangswinkel zwischen 5° und 50°, insbesondere 10° bis 30°, erstrecken.

5. Verbindungsteil nach einem der vorhergehenden Ansprüche, **dadurch gekennzeichnet, dass** an dem hülsenförmigen Abschnitt (2) über den Umfang verteilt zwischen 5 bis 20, insbesondere 8 bis 15, Vorsprünge (4) angeordnet sind.

6. Verbindungsteil nach einem der vorhergehenden Ansprüche, **dadurch gekennzeichnet, dass** zwischen zwei in Umfangsrichtung benachbarten Vorsprüngen (4) ein Spalt vorgesehen ist und die Vorsprünge sowohl in axialer als auch in Umfangsrichtung versetzt zueinander angeordnet sind.

7. Verbindungsteil nach einem der vorhergehenden Ansprüche, **dadurch gekennzeichnet, dass** die Vorsprünge (4) im Querschnitt im Wesentlichen dreieckförmig oder trapezförmig ausgebildet sind.

8. Verbindungsteil nach einem der vorhergehenden Ansprüche, **dadurch gekennzeichnet, dass** das Verbindungteil (1) einen ringförmigen Abschnitt (20) mit einem vertikal hervorstehenden Flansch (21) aufweist, der über biegbare Stege (23) mit dem hülsenförmigen Abschnitt (2) verbunden ist.

9. Verbindungsteil nach Anspruch 8, **dadurch gekennzeichnet, dass** die biegbaren Stege (23) radial nach außen biegbar sind, wenn der hülsenförmige Abschnitt (2) in axiale Richtung zu dem ringförmigen Abschnitt (20) verspannt ist.

## Claims

1. Connection part (1) having a cast body on which a sleeve-shaped section (2) is formed, wherein a plurality of inwardly projecting projections (4) produced by casting or 3D printing are integrally formed along at least one thread on an inner side of the sleeve-shaped section (2) and only one projection is provided on the inner side in each case in the axial direction of the sleeve-shaped section (2), wherein the projections (4) are arranged in several planes distributed over the circumference in the axial direction, **characterized in that** the connection part (1) is designed as an expansion dowel or pipe screw connection and a plurality of bendable webs (7, 23) are integrally formed on the sleeve-shaped section (2) in the axial direction.

2. Connection part according to claim 1, **characterized in that** the projections (4) are formed in the shape of a strip.

3. Connection part according to claim 2, **characterized in that** the projections (4) are aligned inclined in the longitudinal direction to a direction perpendicular to the axial direction, in particular at an angle of 2° to 10°.

4. Connection part according to one of the preceding claims, **characterized in that** the projections (4) extend over a circumferential angle of between 5° and 50°, in particular 10° to 30°.

5. Connection part according to one of the preceding claims, **characterized in that** between 5 and 20, in particular 8 to 15, projections (4) are arranged on the sleeve-shaped section (2) distributed over the circumference.

6. Connection part according to one of the preceding claims, **characterized in that** a gap is provided between two projections (4) adjacent in the circumferential direction and the projections are arranged offset relative to one another both in the axial and in the circumferential direction.

7. Connection part according to one of the preceding claims, **characterized in that** the projections (4) are essentially triangular or trapezoidal in cross-section.

8. Connection part according to one of the preceding claims, **characterized in that** the connection part (1) has an annular section (20) with a vertically projecting flange (21), which is connected to the sleeve-shaped section (2) via bendable webs (23).

9. Connection part according to claim 8, **characterized in that** the bendable webs (23) can be bent radially outwards when the sleeve-shaped section (2) is braced in the axial direction relative to the annular section (20).

## Revendications

1. Pièce de liaison (1) avec un corps en fonte sur lequel est formée une section en forme de douille (2), dans laquelle plusieurs saillies (4) dépassant vers l'intérieur et produites par coulée ou par impression 3D sont formées d'un seul tenant sur une face intérieure de la section en forme de douille (2) le long d'au moins un filet et une seule saillie correspondante est prévue sur la face intérieure dans le sens axial de la section en forme de douille (2), les saillies (4) étant réparties sur la circonférence dans le sens axial dans plusieurs plans, **caractérisée en ce que** la pièce de liaison (1) est conformée comme une cheville à expansion ou un raccord vissé de tuyauterie et plusieurs barrettes pliables (7, 23) sont formées dans le sens axial sur la section en forme de douille (2).

2. Pièce de liaison selon la revendication 1, **caractérisée en ce que** les saillies (4) sont en forme de bande.

3. Pièce de liaison selon la revendication 2, **caractérisée en ce que** les saillies (4) sont inclinées dans le sens longitudinal par rapport à une direction perpendiculaire à la direction axiale, en particulier selon un angle de 2° à 10°.

4. Pièce de liaison selon l'une des revendications précédentes, **caractérisée en ce que** les saillies (4) s'étendent sur un angle de la circonférence compris entre 5° et 50°, en particulier entre 10° et 30°.

5. Pièce de liaison selon l'une des revendications précédentes, **caractérisée en ce qu'**entre 5 et 20, en particulier entre 8 et 15 saillies (4) sont réparties sur la circonférence de la section en forme de douille (2).

6. Pièce de liaison selon l'une des revendications précédentes, **caractérisée en ce qu'**un interstice est prévu entre deux saillies (4) voisines dans le sens de la circonférence et les saillies sont décalées les unes par rapport aux autres dans le sens axial aussi bien que dans le sens de la circonférence.

7. Pièce de liaison selon l'une des revendications précédentes, **caractérisée en ce que** les saillies (4) ont une forme en section sensiblement triangulaire ou trapézoïdale.

8. Pièce de liaison selon l'une des revendications précédentes, **caractérisée en ce que** la pièce de liaison (1) comporte une section annulaire (20) avec une bride (21) qui dépasse verticalement et qui est reliée par des barrettes pliables (23) à la section en forme de douille (2).

9. Pièce de liaison selon la revendication 8, **caractérisée en ce que** les barrettes pliables (23) peuvent être pliées vers l'extérieur dans le sens radial quand la section en forme de douille (2) est contrainte dans le sens axial vers la section annulaire (20).
